Europäisches Patentamt

(19) European Patent Office

Office européen des brevets

(11) Publication number : **0 193 314 B1**

(12) **EUROPEAN PATENT SPECIFICATION**

(45) Date of publication of patent specification :
27.02.91 Bulletin 91/09

(51) Int. Cl.⁵ : **G01V 1/387**

(21) Application number : **86301003.9**

(22) Date of filing : **13.02.86**

(54) External secondary bubble pulse suppression.

(30) Priority : **20.02.85 US 703342**

(43) Date of publication of application :
**03.09.86 Bulletin 86/36**

(45) Publication of the grant of the patent :
**27.02.91 Bulletin 91/09**

(84) Designated Contracting States :
**DE FR GB IT NL**

(56) References cited :
**US-A- 2 771 961**
**US-A- 3 437 170**
**US-A- 3 804 194**
**US-A- 3 923 122**

(73) Proprietor : **Pascouet, Adrien P.**
**8925 Lipan Street**
**Houston Texas 77063 (US)**

(72) Inventor : **Pascouet, Adrien P.**
**8925 Lipan Street**
**Houston Texas 77063 (US)**

(74) Representative : **Frankland, Nigel Howard**
**FORRESTER & BOEHMERT**
**Widenmayerstrasse 4/I**
**D-8000 München 22 (DE)**

## Description

This invention generally relates to a method and apparatus for periodically generating underwater sharp, impulsive acoustic signals suitable for use in seismic exploration, and, in particular, to such acoustic sources which abruptly create a gas bubble at a sufficient depth below the water surface to allow the bubble to ex and and contract.

Certain seismic sources such as explosives, airguns, gas exploders, etc., are fired deep under water to create a gas bubble or cavity which causes the water to acquire oscillatory energy that generates acoustic pressure wavelets. Each wavelet consists of a desired "primary" acoustic pressure pulse $P_0$, which is especially useful for most seismic exploration work. Pulse $P_0$ is followed by an oscillating succession of undesired "secondary" (sometimes called "bubble") acoustic pulses of decreasing amplitude. In this specification, the words "bubble" and "cavity" will be used interchangeably.

For example, a widely used seismic source known as an "airgun" explosively releases a high pressure gas bubble into the water which creates the desired primary pulse having a maximum amplitude $P_0$. After the released high-pressure gas bubble impulsively contacts the surrounding water, it continues to expand as the water first accelerates outwardly and later decelerates until the cavity attains a maximum diameter and comes to rest, at which time the pressure within the cavity is much less than the surrounding hydrostatic pressure.

When the expanding bubble reaches its maximum diameter, there is practically a vacuum inside the bubble, the kinetic energy of the surrounding water is zero, but it possesses maximum oscillatory potential energy which, if not suppressed, will change into kinetic energy, back into potential energy, etc., for a duration of several cycles, each having an oscillatory time period T.

At 1/2 T, the water has maximum potential energy and is ready to rush inwardly to implode the gas in the bubble. After one complete cycle, i.e., at time T, the bubble is recompressed into a relatively small-diameter, high-pressure bubble. The surrounding water then comes to an abrupt stop resulting in a first positive acoustic secondary pulse $P_2$ which is mainly dependent upon the maximum kinetic energy acquired by the inwardly-moving water. The less kinetic energy is acquired by the water, the smaller $P_2$ will be.

Thus, the secondary pulse problem starts when the surrounding water for the first time violently recompresses the bubble to a minimum diameter or volume. Its kinetic energy is then again zero. Its potential energy is mainly contained within the recompressed gas inside the bubble, and is ready to cause the bubble to again explode in its oscillatory scheme.

In this manner, the oscillatory energy stored in the water produces several successive secondary pulses of decreasing amplitude until a portion of the energy of oscillation becomes dissipated by natural processes, such as turbulence, and the remaining portion is consumed to produce the undesired secondary pulses.

The number of such bubble explosions (expansions) and implosions (contractions) may vary, but typically 4 to 6 significant secondary pulses can be expected after each primary pulse $P_0$ which is generated by the seismic source.

Hence, a substantial portion of the acoustic energy released by the seismic source goes to waste. This is so because only a portion of the energy contained in the released gas is used to produce the desired primary seismic pulse $P_0$, while the remaining and substantial portion of the energy becomes converted into harmful secondary seismic pulses which must be suppressed.

In seismic exploration, both the primary and secondary acoustic pulses act as distinct acoustic disturbances, which travel in the water in all directions, penetrate the earth, strike one or more rock formations or reflectors, and then return into the body of water.

The primary and secondary pulses produce reflected seismic wavelets. But, since the secondary pulses and their reflected waves occur at times when the reflected primary waves also return from the subterranean reflectors, it will be apparent that the secondary pulses and their reflected wavelets interfere with the reflected primary waves.

Because the reflected secondary waves and the reflected primary waves are similar in shape, no practical way has yet been found for distinguishing between them.

The known prior art found neither a practical nor an economical solution for dealing with the "bubble" or secondary pulse problem when using a single explosive-type seismic source. Such secondary pulses are now being attenuated by using large arrays of differently sized airguns. All the airguns in the array are fired simultaneously so that the $P_0$ pulses are in phase for addition. Most of the secondary pulses are out of phase and therefore when added they cancel each other out.

The secondary-to-primary ratio $P_2/P_0$ is the yardstick by which all marine seismic sources are measured as to bubble suppression. An "ideal" source is said to be that source which has a ratio $P_2/P_0=0$ for a frequency range from 0-125 Hz. The extent to which a particular seismic source approaches the ideal seismic source can be readily measured by measuring its $P_2/P_0$ ratio.

An ideal seismic source produces a single, short, sharp acoustic impulse having sufficient energy and no secondary pulses. Sharp impulses are needed to improve the definition of seismic reflections, because resolution is inversely proportional to the time-width of the impulse : the larger the time-width of the impulse, the less desirable it is.

Fired near the water surface, a dynamite charge closely approximates the ideal seismic source, because the bubbles resulting from each explosion are vented immediately into the atmosphere, hence there are no bubble implosions.

If not fired near the water surface, explosive seismic sources will produce undesired secondary pulses, unless some form of implosion suppression is utilized.

In the past twenty-five years or more many attempts have been made to attenuate the oscillatory secondary pulses and/or to reduce their ill effects.

One early mechanical technique attempts to prevent the secondary pulses from traveling vertically downward towards the water bottom by substantially surrounding the gas bubble source with a container or cage having perforations, so that the expanding gas bubble would have to do work in order to force water through the perforations. The work done by the expanding gas bubble dissipates its internal energy, so that the ensuing secondary pulses will have reduced amplitudes. This technique was used in a seismic source trademarked FLEXOTIR.

A serious limitation inherent in this technique is that the desired primary pulses also become reduced in strength because they can travel freely only through the available perforations. Also, the perforated cage becomes subjected to rapid deterioration, due to the great stresses to which it becomes subjected when large differential pressures become exerted across its wall.

Techniques which are based on injecting air into the expanding bubble for shaping the secondary pulses have produced disappointing results and most of them were abandoned.

For example, in U.S.A. patent 3,371,740, the injection of air during the expansion of the cavity might increase the size of the cavity without reducing the amount of kinetic energy stored in the water. The injected atmospheric pressure is too low and results in a $P_2/P_0$ ratio approaching 40%, which is far in excess of the acceptable 10% norm.

In U.S.A. patent 3,454,127, the air injection is started too early during the expansion of the bubble and at a flow rate which is subsonic, and therefore it is insufficient to establish hydrostatic pressure inside the cavity within the required time interval.

In U.S.A. patent 3,601,216, the final pressure established inside the cavity is not hydrostatic. In U.S.A. patent 3,653,460, Column 5, lines 1-30, it is shown that the volume of air required to bring the $P_2/P_0$ ratio down to 14% is 6.4 times the volume needed to generate the main pulse.

Due to the inefficiency or impracticability of known bubble suppression techniques, the seismic industry was obliged to employ a "tuned" array of seismic sources. Typically, these sources are airguns of markedly different sizes.

When all the airguns in a tuned array, using airguns of different sizes, are fired simultaneously, theoretically the amplitude of the resulting primary pulse of the array will be equal to the sum of the amplitudes of the individual primary pulses generated by the individual acoustic sources in the array, whereas the amplitudes of the secondary pulses will be reduced because (1) they are not in phase, (2) they occur at different times, and (3) they have random frequencies.

US-A-3804194 discloses various embodiments of a seismic pneumatic energy pulse generator. The simplest embodiment discloses two chambers to contain compressed air, which have radial exhaust ports, and which have respective piston valves. One valve forms the front end of the first chamber and the other valve forms the rear of the first chamber and the front of the second chamber. In operation of this device the first valve initially moves to permit compressed air from the first chamber to be released through the appropriate exhaust port, and subsequently the second valve moves, as a consequence of the de-pressurization of the first chamber, to permit the compressed air from the second chamber to escape through the appropriate exhaust port. The release of the two charges of compressed air is virtually simultaneous, and a single larpe bubble is generated. This is said to provide a good bubble ratio.

US-A-3437170 is directed to a method and system for generating seismic waves with control of the power spectrum, utilising multiple acoustic energy sources. In accordance with the teaching of this specification two or more point sources are activated simultaneously, such that the bubbles generated coalesce to form a single bubble.

US-A-2771961 relates to a method of initiating an underwater seismic disturbance. In the teaching of this specification two explosives are used, at spaced apart positions, but the teaching of the specification is that the explosives are detonated simultaneously. The explosions, in the teaching of this specification, occur at difference depths, generating two bubbles which have the same period of oscillation. Thus the bubbles oscillate in phase.

US-A-3923122 relates to a seismic pneumatic energy source with attenuation of bubble pulse amplitude. In this specification, all the expanding gases of a primary seismic energy pulse are deflected in the same direction, so the bubble has an elongated shape. The specification discloses a cylindrical deflector adapted to be mounted on an air gun, which causes the elongate-shaped bubble to be generated. The specification also discloses an arrangement in which a deflector mounted on an air gun is provided with flapvalves so that air can pass through the flapvalves to form the bubble, but cannot pass back through the flapvalves when the bubble is beginning to collapse.

Nevertheless, the present state of the art in suppressing bubble pulses has been achieved by these "tuned" airgun arrays, which are now widely used.

The average characteristics of such a tuned airgun array are :

– Output : 1 bar-meter per 983 cm³ of air at 137.9 bar (peak to peak from 0-125 Hz), and
– a ratio of $P_2/P_0$ of about 1/10 or 10%.

Therefore, any source which generates bubble pulses must achieve about the same $P_2/P_0$ ratio of 10% or less, peak-to-peak from 0-125 Hz, in order to be competitive in the seismic industry.

Even though the array technique is now the standard in this art, it still has serious drawbacks because it is only a composite of individual sources, each source lacking a narrow, sharp acoustic pulse as required. Also, it is very expensive to build such an array because it requires a large number of differently-sized airguns, as well as heavy and expensive air compressors to provide the volume of 137.9 bar air consumed by the large number of airguns.

In general, the known bubble suppression devices have the following drawbacks, taken singly or in combination : they are cumbersome ; they require excessive support machinery and space therefor ; they require very large compressors and excessive energy to run them ; they are expensive to maintain ; and they require an excessive inventory of expensive replacement parts to maintain in operational condition the different sizes of seismic sources now utilized to form arrays.

Accordingly, it is desirable to provide a practical, economical, and fully effective method for total bubble suppression.

It is also desirable to provide a seismic source which is bubble-free, which has a substantially flat power spectrum over a relatively broad frequency range, which produces a single sharp acoustic impulse followed by negligible secondary pulses, which has effective bubble suppression means, which is energy-efficient, which lends itself to become easily incorporated into existing marine seismic energy sources and methods of using them without affecting the utility of such known sources and methods, which is simple in design, compact in use, and relatively inexpensive to manufacture and maintain, and in which the volume of air required for aborting the implosion is reduced to a small fraction of what was generally believed to be necessary to achieve adequate bubble suppression, that is, to achieve $P_2/P_0$=10% or less.

According to one aspect of this invention there is provided a method for generating within a body of water an impulsive acoustic signal suitable for use in seismic exploration, said method comprising the steps of generating within said body of water a first explosion to create a first bubble characterized in that the method comprises the further step of generating, within said body of water, a second explosion so as to create a second bubble, said second explosion being generated at about the time when the implosion of the first bubble begins, the energy of the second explosion and the distance L between the second explosion and the first bubble being such that the second bubble interacts with but does not coalesce with the first bubble.

Conveniently said second explosion has the same strength as the first explosion.

Advantageously the distance L is about twice the maximum radius of the first bubble, said explosion being generated while the volume of the first bubble is at its maximum value within a few per cent.

Conveniently the water motion generated by the first bubble initially has a radial motion, the second explosion serving to transform this radial motion into axial motion.

Preferably a first charge of highly compressed gas is explosively released to thereby generate, within said body of water, a powerful acoustic pulse and said first bubble, and a second charge of a highly compressed gas is subsequently released within the water to generate the second bubble.

The method as described above may be used in seismic exploration, the method steps being repeated while a seismic streamer cable is towed through said body of water for detecting the seismic signals produced.

According to another aspect of this invention there is provided a marine acoustic source for generating impulsive acoustic signals in a body of water, comprising a signal chamber to contain a first charge of a highly compressed gas, a normally-closed first fastacting valve means to normally maintain said signal chamber closed, the chamber having discharge port means into the water, a second chamber to contain a second charge of a highly compressed gas, a normally-closed second fast-acting valve means to normally maintain said second chamber closed, the second chamber having outlet means into the water, and control means to explosively open said first valve means so as to release said first charge and thereby generate at a first point within said body of water an impulsive acoustic signal and a first bubble and further control means to subsequently open said second valve means to thereby release said second charge from said second chamber through said outlet means and into said water, wherein the further control means are adapted to open said second valve means while said first bubble is substantially at its maximum volume.

Conveniently the further control means are such that the second valve is opened immediately after said body of water starts to implode said first bubble.

Conveniently the release of said second charge generates a second bubble at a second point within said body of water, said second bubble having substantially the same volume as said first bubble, the distance between the first and second points being about twice the maximum radius of said first bubble.

Conveniently the first valve means is a first air gun, said second valve means is a second air gun, and means are provided maintaining the ports and outlets of said air guns separated by a distance which is substantially equal to about twice the maximum radius of said first bubble.

It has been found that the method of the invention substantially reduces the pressure pulse generated by the first inward radial motion of a body of water, when a bubble in the water begins to implode, by changing the radial motion into an axial motion. The change from radial motion into axial motion is produced by generating a second radial motion of opposite phase within the body of water, by the second bubble.

The method can be used to substantially reduce the pressure pulse generated by the implosion of the body of water as the first bubble collapses.

In order that the invention may be more readily understood, the invention will now be described, by way of example, with reference to the accompanying drawings in which :

FIGURE 1 illustrates an oscillating bubble in a body of water ;

FIGURE 2 is a pressure vs. time signature corresponding to FIGURE 1 ;

FIGURE 3 illustrates the behavior of bubble 1 when acted upon by bubble 2 in accordance with the invention ;

FIGURE 4 is a pressure vs. time signature corresponding to FIGURE 3 ;

FIGURES 5-10 are sectional views of an illustrative embodiment of this invention, showing six operating phases thereof ;

FIGURE 5A is a sectional view on line 5A-5A in FIGURE 5 ;

FIGURES 11-18 are a series of graphs comparing actual pressure vs. time and power vs. frequency plots obtained without the invention and with the invention ;

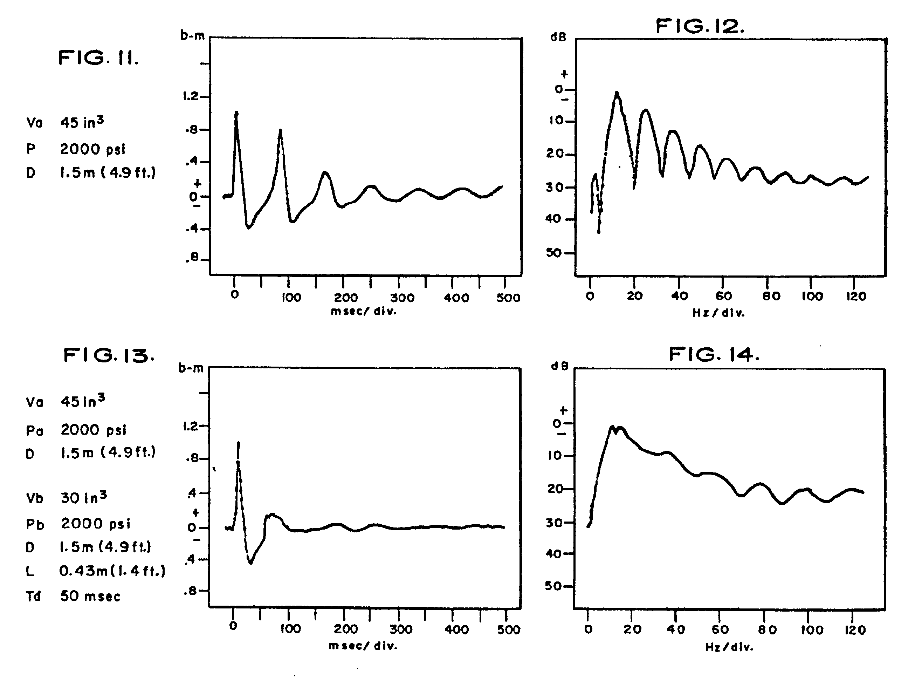

FIGURES 11 and 12 are pressure vs. time and power spectrum vs. frequency plots, respectively, of signal generator 10' operating alone ;

FIGURES 13 and 14 are pressure vs. time and power spectrum vs. frequency plots, respectively, of signal generator 10' operating together with generator 10" ;

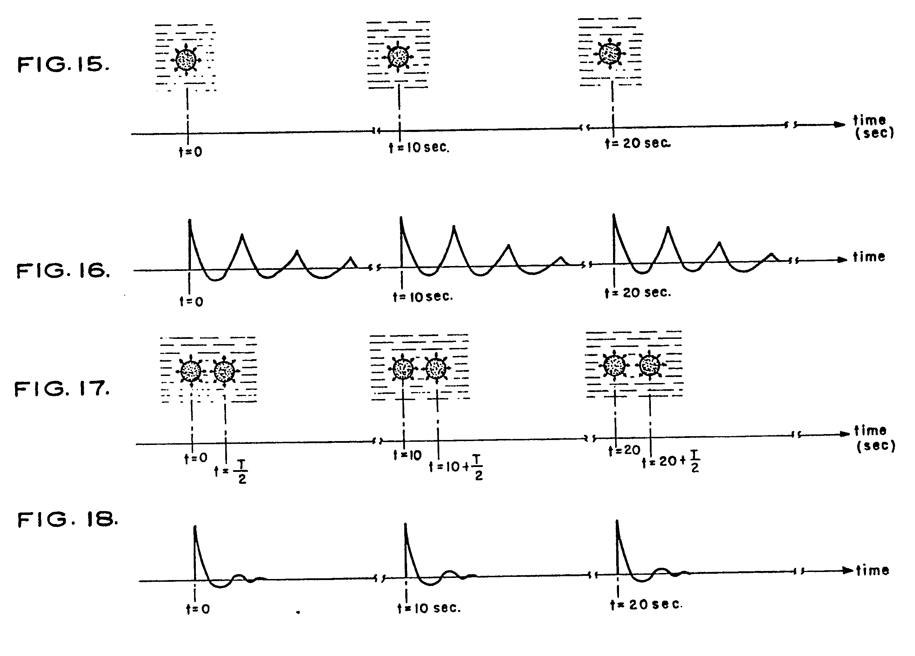

FIGURE 15 illustrates consecutive explosions spaced 10 seconds apart and generated with generator 10' only ;

FIGURE 16 shows consecutive pressure signatures obtained from the consecutive explosions shown in FIGURE 15 ;

FIGURE 17 illustrates consecutive double explosions also spaced 10 seconds apart but generated with generators 10' and 10" following the method of this invention ; and

FIGURE 18 shows consecutive pressure signatures obtained from the consecutive double explosions shown in FIGURE 17.

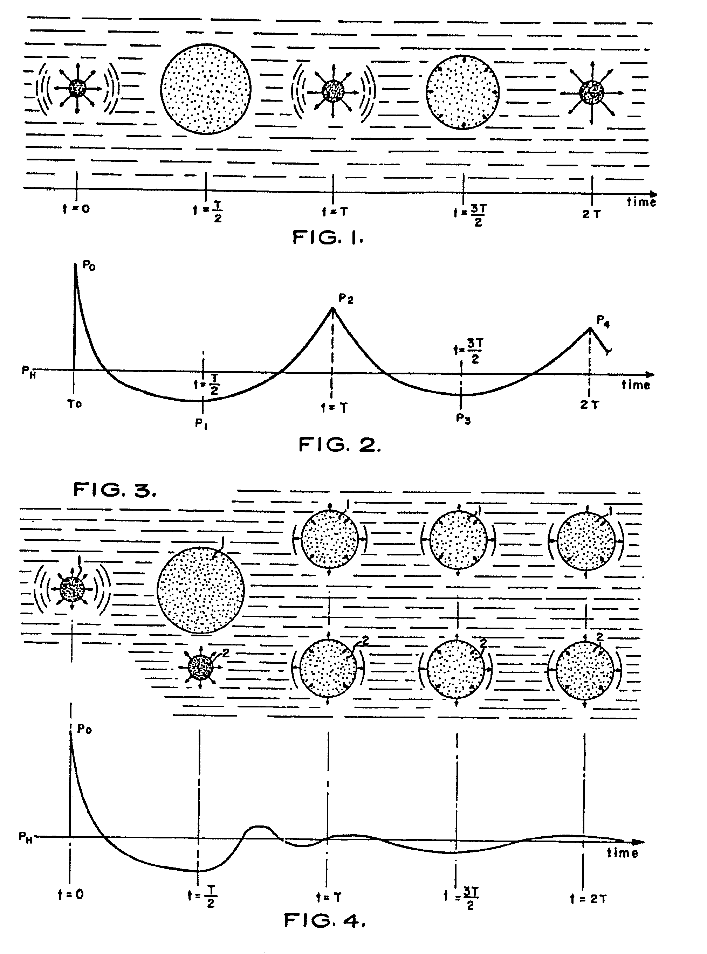

Conventional methods for operating explosive marine seismic acoustic generators involve generating a first explosion which releases at a depth D in a body of water, at a time $t_0$ (FIGURES 1, 15), a first bubble 1 having a gas G1, a pressure Pa, and a volume Va. The pressure inside bubble 1 varies relative to the hydrostatic pressure, as bubble 1 undergoes cyclic implosions (contractions) and explosions (expansions) at an oscillatory period T.

The pressure signature (FIGURES 2, 16) exhibits a desired pressure impulse $P_0$ as well as undesired positive (P2, P4, ....) secondary pressure impulses of decreasing amplitude.

It has been suggested that prior to the time that bubble 1 reaches its maximum diameter at T/2, if the pressure inside bubble 1 were raised by an injection of gas, then the amplitudes of the secondary pressure pulses, resulting from the subsequent implosions and explosions of bubble 1, would be substantially reduced, as compared to the amplitudes of the secondary pulses which would be produced without such gas injection. I found this assumption to be wholly incomplete and inaccurate.

I have unexpectedly discovered why prior art workers in this art have failed to fill the long-existing need for a single explosive marine seismic acoustic generator, which is substantially bubble free, i.e., which is characterized by a secondary-to-primary $P_2/P_0$ ratio of about 10% or less (FIGURE 4). •

I have unexpectedly discovered theoretically and experimentally that the secondary pressure pulse generated by the implosion increases very rapidly at the early stage of the collapse of the cavity.

For instance, if one wants to maintain the secondary to primary ratio $P_2/P_0$ within 10%, one must not allow the radius of the cavity to shrink by more than 1%, or the volume of the cavity to shrink by more than about 3%.

In my copending application, I have described a bubble injection process which required an injection of a volume Vb of gas G2 into bubble 1. In one embodiment, the optimum ratio for Vb/Va was 2.15 and $P_2/P_0$ was near zero. This ratio Vb/Va=2.15 is already more than a 100% improvement over the known prior art.

I have now discovered that it is possible to substantially reduce the secondary pulses following the implosion of the body of water by generating a second gas bubble 2 outside and in the vicinity of the first bubble 1 when or just after bubble 1 reaches its maximum size.

I have also discovered that the opposite is also true : the primary pressure pulse generated by an explosion, or by the explosive release of a high-pressure gas within the water, can be reduced or suppressed by generating an implosion outside and in the vicinity of the explosion about the time the explosion starts.

Thus, it is now possible, according to my invention, to suppress the pressure pulse produced by an implosion by generating an explosion, or conversely to suppress the pressure pulse produced by an explosion by generating an implosion. I have unexpectedly discovered that the reciprocity or flip-flop between explosion and implosion ensue from the fact that both the implosion and explosion produce the same type of motion in the water.

This motion is radial motion which is nearly the same in all directions, with difference however that an implosion generates an inward radial motion, and an explosion generates an outward radial motion. Hence, these two radial motions are out of phase or reversed phase.

By contrast, a motion which has an axis of symmetry is generally called an "axisymmetric" motion. For simplicity, such a motion will be called in this specification and claims an "axial" motion.

What I have discovered is that the radial character of the motion of the water is of prime importance for the generation of a pressure pulse. For the same amount of kinetic energy stored in water motion, the more radial the motion is, the more powerful the pressure pulse will be.

If an implosion or an explosion is generated at a sufficient depth for the body of water to be considered as isotropic in the vicinity of the implosion or explosion, the motion generated by the implosion or explosion will be substantially radial. The cavity will be substantially spherical and will undergo several oscillations producing several powerful pressure pulses.

On the other hand, if the implosion or explosion is generated at a shallow depth, or immediately below the water surface, where neither the mass repartition nor the hydrostatic pressure are the same in all directions (non-isotropic), the motion generated by such "shallow" implosions or explosions will be "non-radial," but rather "axial" in the vertical direction (the axis of symmetry).

It is a well-known fact that an implosion generated just below the water surface will not produce any pressure pulse. The flow of water rushing inward will be deflected upward, and its kinetic energy dissipated in the process without producing any significant pressure pulse. It is also well-known that an explosion generated at a shallow depth will produce a reduced primary pulse and no secondary pulse, the energy being dissipated in the vertical (axial) motion of the water (confer Seismic Energy Sources Handbook, 1968).

The inability of an axial motion to generate a powerful pressure pulse within a body of water, as well as the ability of a radial motion to produce such a powerful pulse, is even more completely demonstrated when using a watergun process, such as is described in my prior U.S.A. patents 4,303,141 and 4,185,714.

Initially, when using the watergun, a water slug is axially propelled downwardly and an axial motion is thereby generated within the body of water. In this phase, only a weak, non-significant pressure pulse is generated. In a later stage, the kinetic energy of the axial motion is transformed into kinetic energy of radial motion (the implosion of the cavity), and it is this radial motion which generates the desired powerful pressure pulse.

In sum, the same quantity of kinetic energy will not produce any significant pressure pulse when stored in an axial motion, but it will produce a powerful pressure pulse when stored in a radial motion.

It is also known that when two cavities within a body of water undergo oscillations in the same phase, they have the tendency to attract each other and coalesce. But the force of attraction is relatively small.

What I have discovered is that when two cavities undergo oscillations in reversed (opposite) phase within a body of water, they are pushed away from one another by a strong repulsive force.

At each cycle, the radial motion of each cavity is deflected by the opposite motion of the other cavity into an axial motion, and therefore the pressure pulses generated, if any, are strongly reduced. Finally, the kinetic energies of the two motions are dissipated during the drifting of the cavities away from one another.

I have found that the amount of kinetic energy stored in the water located between the two centers of motion is of prime importance for the pulse-suppression process.

As the separation distance between two centers of radial motion increases, the mass of the body of water between the two centers increases rapidly and the body's velocity decreases rapidly. Hence, for a given strength of the radial motion, there is an optimum separation distance between the two centers.

I have found that the centers of motion should be separated by a distance substantially equal to about twice the maximum displacement of the first radial motion.

I have now discovered that $P_2/P_0$ ratio equal about 10% can be achieved by generating a timely and sufficient second explosion (FIGURE 3) which creates a bubble 2 outside of bubble 1. Bubble 2 is generated by a gas G2 having a pressure Pb and a volume Vb. For convenience Pb is made equal to Pa, where Pa is the pressure of gas G1 which generated bubble 1.

The second explosion must occur at the instant that bubble 1 has reached its maximum size (FIGURE 3), and bubble 2 must be sufficiently close to bubble 1 to maximally interact with it.

Thus, 1 generate two consecutive explosions (FIGURE 17) within milliseconds from each other to thereby obtain a single powerful seismic impulse (FIGURE 18) which is characterized by $P_2/P_0$ being equal to approximately 10%.

The two explosions are of such a character that their effects in the body of water mutually interact to an extent that the second bubble substantially aborts the implosion of the first bubble, and the first bubble substantially reduces the primary pulse and aborts the implosion of the second bubble.

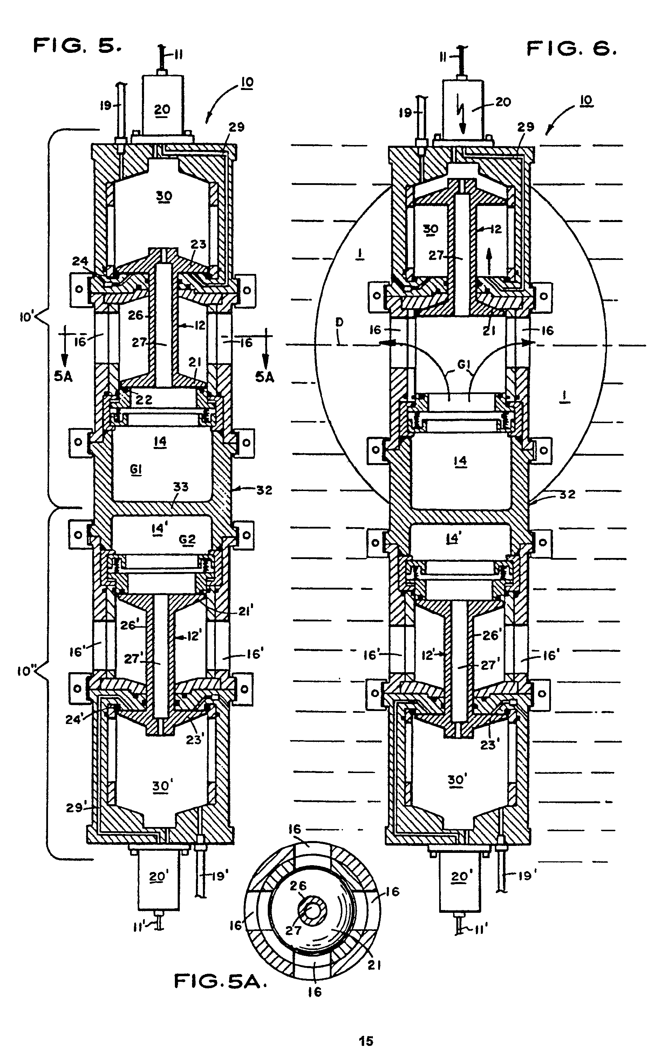

With general reference to FIGURES 5-10, my present acoustic source 10 has a first explosive acoustic generator 10′ and a second explosive acoustic generator 10″ that have common elements which will be designated with the same reference characters to simplify the description, and similar elements will be designated with a prime (′) whenever possible.

Each acoustic generator 10′ and/or 10″ can be a commercially available airgun, such as the one manufactured under the trademark PAR, which is fully described in U.S.A. Patent 3,379,373. Other such generators can be employed equally well for the purposes of this invention.

Such an airgun has a first chamber 14 whose volume Va is charged up with air G1 under pressure Pa. Chamber 14 communicates directly with an explosive shuttle valve 12. Valve 12 includes a main piston 21 engageable with a seal 22 for retaining the charge of pressurized gas G1 within first chamber 14, and a control piston 23 engageable with a seal 24 for controlling the movements of piston 21. Pistons 21 and 23 are held together, in spaced parallel relation, by a hollow shaft 26 having an axial bore 27 therethrough.

A compressor on the deck of the seismic vessel (not shown) supplies air pressure to input line 19 at 138 bar, which is fed to a return chamber 30 from which it passes through the axial bore 27 into first chamber 14.

The actuation of valve 12 is controlled by a controller such as a solenoid-operated valve 20, which is energized periodically by a short electric pulse on line 11 produced by a conventional electronic actuating network (not shown) also located on the deck of the seismic vessel. The firing of the first explosive generator 10′ is periodically repeated as dictated by the firing cycle of the seismic survey.

When solenoid valve 20 is fired (FIGURE 6), pressurized gas flows from line 19 through a trigger passage 29 leading to the opposite surface of control piston 23 from that facing control chamber 30. The trigger pressure is sufficient to instantly overcome the holding force of the air pressure in control chamber 30, allowing the pressurized gas G1 in the first chamber 14 to suddenly accelerate main piston 21 away from its seal 22, thereby suddenly opening the discharge ports 16 to first chamber 14.

Then, the pressurized gas G1 from first chamber 14 is explosively released through discharge ports 16 into the surrounding water, wherein it produces at time $T_0$ bubble 1 (FIGURE 3) and a desired primary impulse $P_0$ (FIGURES 4, 18). In the absence of my second explosion, bubble 1 would undergo a series of implosions and explosions (FIGURE 1) at an oscillating period T, which would result in the undesirable secondary peaks P2, P4... of decreasing amplitude (FIGURES 2, 16).

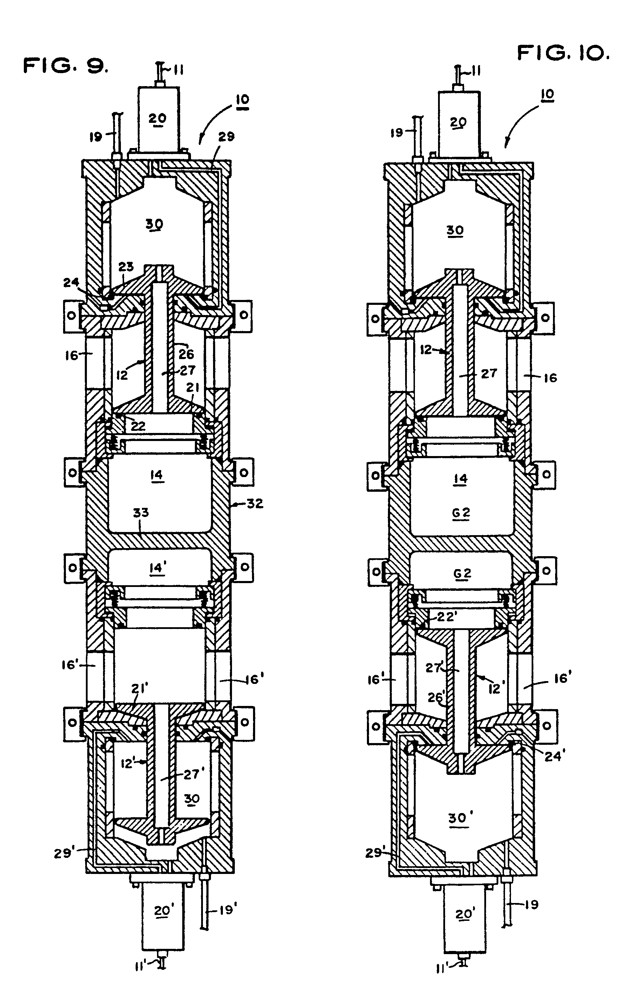

After the discharge of the gas G1 from first chamber 14, the pressure in control chamber 30 returns shuttle valve 12 to its closed position (FIGURE 9), and first generator 10′ is ready for a new cycle.

To abort the first implosion, I employ a second explosive generator 10″ which generates an explosion outside of bubble 1.

The second generator 10″ has a second chamber 14′ which contains a volume Vb of gas G2. For the sake of economy Pb=Pa.

Generator 10″ also has an explosive shuttle valve 12′.

The first generator 10′ and the second generator 10″ are fixedly coupled to each other back-to-back in an axially aligned relation. For that purpose I provide a single container 32 having a partition wall 33 which defines the first chamber 14 and the second chamber 14″.

Except for container 32, the first generator 10′ and the second generator 10″ are of the type previously briefly described above and more fully described in U.S. patent 3,379,373.

The solenoid valves 20, 20′ are thus axially opposed. Solenoids 20 and 20′ are energized from the electronic network which is on board the seismic vessel.

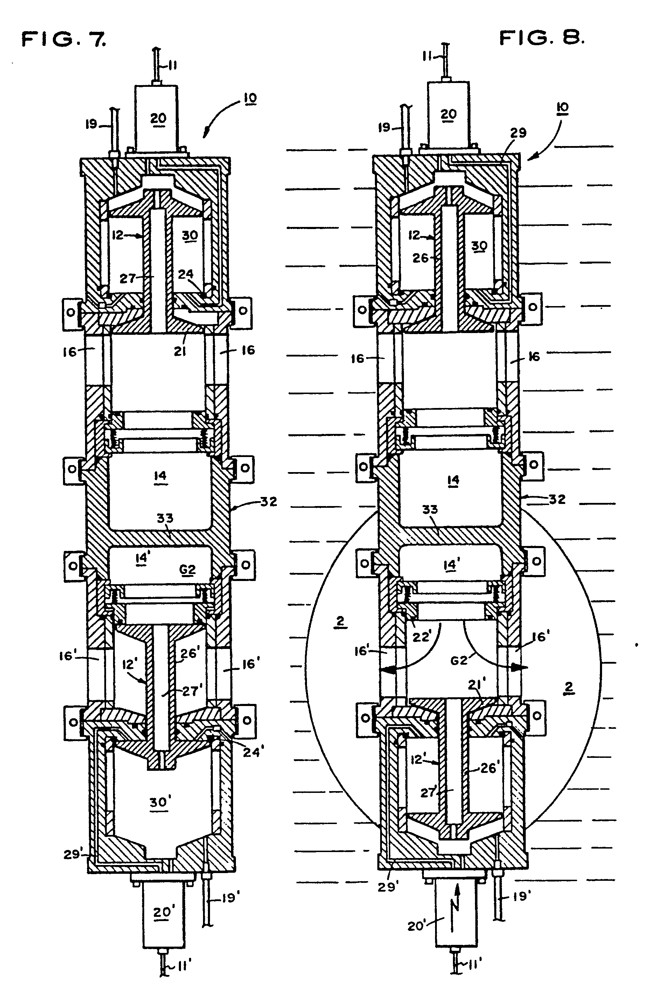

Second generator 10″ (FIGURE 8) generates bubble 2 after a time delay Td. When first generator 10′ is ready to be fired (FIGURE 5), first chamber 14 has 138 bar, and valve 12 is being kept closed by the 138 bar pressure in chamber 30.

An electric pulse is sent to solenoid 20 on line 11 (FIGURE 6) which causes the gas G1 from first chamber 14 to explosively discharge outside through discharge ports 16 into the water to create bubble 1. After a time delay Td of 50 ms, a second electric pulse is sent to solenoid 20′ on line 11′ (FIGURE 8) which causes shuttle valve 12′ to explosively release gas G2 from second chamber 14′ into the water through discharge ports 16′ and thereby generate bubble 2.

Valve 12 opens at a time t=0 and closes at t=60 ms, and valve 12′ opens at 50 ms and closes at 110 ms. Both valves 12 and 12′ are open together for about 10 ms. The first chamber 14 and second chamber 14' receive a new charge of compressed air immediately after being discharged.

If source 10 is operated at a low hydrostatic pressure, then bubble 1 will have a very large volume. On the other hand, if source 10 is submerged at greater depths, the volume of bubble 1 will be much smaller. In the shallow depths, the volume of bubble 1 can be so large that it will encompass the discharge ports 16' of explosive generator 10". On the other hand, in deeper waters, bubble 1 will not encompass ports 16' of explosive generator 10".

It is important to fire source 10 at a sufficient depth so that bubble 1, when it fully expands to its maximum diameter, will not encompass ports 16' of second generator 10" and will not coalesce with bubble 2.

After 50 ms, when bubble 1 is fully expanded and has already reached its maximum size, second generator 10" is fired and its bubble 2 starts to increase in size. Because bubble 2 follows the path of minimum resistance, bubble 2 will push the water outwardly and especially the water which is between the two bubbles. Bubble 2 will increase in size and will decrease the size of bubble 1 while the radial inward motion of the water into bubble 1 will be changed into an axial motion having a direction parallel to the axis of source 10.

Bubble 2 continues to expand and at the same time bubble 1 collapses further. The volume of bubble 1 is decreasing and its inner pressure is increasing, while bubble 2 is increasing in size and its inner pressure is decreasing until the two bubbles 1 and 2 attain the same inner pressure.

The pressures in bubbles 1 and 2 optimally reach hydrostatic pressure at the same time and both bubbles will continue to oscillate gently and will emit a wavelet having negligible secondary pulses.

This intimate interacting by bubble 1 with bubble 2 causes the water to dissipate its potential oscillatory energy, in pushing away bubble 2 from bubble 1.

In this manner, the oscillatory energy stored in the water becomes dissipated in the process of pushing each of the bubbles instead of emitting relatively large amplitude pulses.

Detailed Description Of One Operating Cycle

The pressure in a particular space "S" will be designated by "Ps" to simplify the description. Thus, for example, P14 means the pressure in the space defined by chamber 14.

PHASE 1. First Generator 10' Is Ready To Fire

– Generator 10' (FIGURE 5) and generator 10" are armed.
– Solenoid valves 20 and 20' are closed.

– Shuttle valves 12 and 12' seal respectively first chamber 14 and second chamber 14'.
– Source 10 is pressurized :
   P30=P14=P14'=P30'=138 bar
   P29=Ph (hydrostatic pressure)=1.2 bar
– Volumes :
– First chamber Va=V14=.74 lit
– Second chamber Vb=V14'=.5 lit

PHASE 2. First Generator 10' Exploded - Peak $P_0$ Emitted At t=0 (FIGURES 2, 4, 6)

– Firing of first generator 10' is initiated by energizing solenoid valve 20 with a short electric pulse on line 11.
– Shuttle valve 12 moves up and allows the compressed air G1 (138 bar) from first chamber 14 to discharge explosively through ports 16 into the surrounding water and to form therein bubble 1.
– The explosive release of bubble 1 from chamber 14 generates the desired primary acoustic impulse $P_0$, as shown on the pressure signature (FIGURE 2).
– Bubble 1 continues to expand (FIGURES 1, 3).

PHASE 3. Bubble 1 Is Close To Its Maximum Size At t=45 ms (FIGURE 7)

– Bubble 1 is near its maximum size.
– Pressure inside bubble 1 is much less than the hydrostatic pressure ; actually bubble 1, at this instant, can be considered as being a vacuum cavity.
– A negative impulse P1 is on the pressure signature.
– Second generator 10" is still in its stand-by mode.

PHASE 4. Generator 10" Generates Bubble 2 Outside Bubble 1 At t=50 ms. (FIGURE 8)

– Bubble 1 has reached maximum size.
– At 50 ms after $T_0$ (the time delay Td=50 ms depends on the size of bubble 1, depth of firing, and/or firing pressure Pa) solenoid 20' of second generator 10" is energized.
– Shuttle valve 12' opens to allow the compressed air G2 from second chamber 14' to discharge abruptly through outlet ports 16' into the surrounding water and to form therein bubble 2 (FIGURE 4).
– The pressure impulse shows an upward step (FIGURE 4).

PHASE 5. Bubble 2 Establishes Hydrostatic Pressure Inside Bubble 1 At t=55 ms (FIGURE 9)

– The amplitude of the acoustic impulse is near zero.

– Shuttle valve 12 has moved to again seal off its chamber 14.

## PHASE 6. Bubbles 1 And 2 Are At Hydrostatic Pressure And Oscillate Gently Around their Equilibrium Position

– The implosion of bubble 1 has been aborted and no substantial pressure pulse was emitted by bubble 2.

– Bubbles 1 and 2 attain hydrostatic pressure. They are stabilized and separated from each other. They undergo low-amplitude oscillations which generate a very low-amplitude, low-frequency acoustic wavelet.

– Shuttle valve 12' has moved to again seal off its chamber 14'.

– first generator 10' and second generator 10" are again pressurized up to 138 bar and made ready for another cycle.

## General Aspects Of Operation

I have discovered the following :

1. When charged at the same pressure, the volumes of chambers 14' and 14 used to generate bubble 2 and bubble 1 should be approximately equal.

2. The distance between ports 16 and 16' emitting the first and second bubbles 1 and 2 should be approximately equal to twice the maximum radius reached by bubble 1.

3. The time delay Td between the starts of bubble 1 and bubble 2 should be approximately half the period (T/2) of bubble 1.

I also discovered that the above values are not really critical : 20% variation can be allowed and an acceptable acoustic signal will still be produced.

In one embodiment, the distance L between the centers of ports 16 and 16' was 43 cm, first chamber 14 had a volume Va=.74 lit and second chamber 14' had a volume Vb=.5 lit, giving a ratio Vb/Va=.67. Source 10 was pressurized to 138 bar and was fired in a horizontal position at a firing depth D of 1.5 m.

Under these conditions, bubbles 1 and 2 become stabilized and establish hydrostatic pressure inside each other, and $P_2/P_0$ is equal to about 10%, which corresponds to an acceptable suppression of the undesired secondary impulses.

Thus, the volume Vb of gas G2 required to generate an efficient second bubble 2 is considerably less than that corresponding volume of gas Vb needed for the internal injection technique described in my said copending patent application.

Using my present method, the ratio Vb/Va was 0.67 compared to a value of Vb/Va= 2.15 needed in accordance with the method described in said copending application. In other words, the present method offers an improvement by a factor of 2.15/0.67=3.2.

I also observed that bubbles 1 and 2 never coalesced together, and when they reached the surface of the body of water they were about 2 meters apart. This separation was rather surprising, especially when one considers that ports 16 and 16' had a separation therebetween of only 43 cm, and that acoustic source 10 was fired only 1.5 m below the water surface.

## Advantages

### 1. Extended Power Spectrum - Single Point Source

In addition to having advantages in the pressure-time domain, my novel acoustic source 10 also has very important advantages in the power spectrum-frequency domain.

By measuring the pressure signature with a detector positioned close to source 10, for example one meter below the source, it is possible to construct a pressure-time signature for known first generator 10' operating alone (FIGURE 11), and for my source 10 operating in conjunction with a second generator 10" (FIGURE 13), as well as their corresponding power spectra for first generator 10' (FIGURE 12) and for generators 10' and 10" operating consecutively (FIGURE 14).

It will be observed from a detailed comparison of the pressure plots (FIGURES 11, 13) and power spectra plots (FIGURES 12, 14) that :

– the uneven power spectrum (FIGURE 12) for generator 10' is such that at some frequencies the amplitude of the spectrum is maximum, while for other frequencies, in the useful range, the amplitude of the spectrum is near zero ;

– the power spectrum (FIGURE 14) for my acoustic source 10 extends from 6 Hz to 125 Hz and is relatively smooth over the entire useful frequency range, resulting in better resolution and signal-to-noise ratio ;

– my acoustic source 10 can be considered a point source because it produces a single, sharp, narrow-width pressure impulse $P_0$ (FIGURES 4, 13) and a relatively flatpower spectrum curve (FIGURE 14) from 6 Hz to 125 Hz ;

– the high frequency content of my emitted single pressure impulse $P_0$ is very useful to the geophysicists for improving the discrimination of closely-spaced events and for providing better resolution at all depths ;

– the low-frequency content of my emitted impulse $P_0$ is extremely important to the geophysicists because the absorption of the earth varies exponentially with the frequency, i.e., the lower the frequency the less the earth will absorb the seismic impulses and the deeper the penetration will be ; and

– the peak of the power spectrum (FIGURE 14) for my acoustic source 10 is positioned at a much lower frequency, as compared to the position of the peak of the power spectrum for the known first generator 10′ operating without my second generator 10″. This shift in the position of the spectrum peak toward a lower frequency is also of great benefit to geophysicists.

## 2. Arrays

– Because they, are not point sources, conventional acoustic sources, such as generator 10′, that generate secondary pulses have to be deployed in tuned arrays which use sources of different sizes in order to reduce the amplitudes of the individual bubble trains in the vertical and orthogonal planes. In other directions, and particularly the horizontal planes, such arrays detune, while in certain other directions the bubble energy will become additive.

– In contrast, my single-point, high-energy acoustic source 10 can be used alone or several identical sources 10 can be used to construct a very efficient tapered array.

– As distinguished from known acoustic generators 10′ which produce wavelets, no tuning and no bubble cancellations are required when an array is built using a number of my identically-sized acoustic sources 10.

– The pressure signature produced by an array using my sources 10 will have the same shape as the pressure signature (FIGURE 13) of the individual sources 10 except for amplitude. There will be a linear summation of the individual impulse amplitudes (bar-meters), and the composite energy of the array will become proportional to $n^2$, where n is the number of sources 10 used to construct the array.

– Because the shapes of the pressure signature and of the power spectrum of an array produced by a plurality of my identical sources 10 are the same as those of the individual sources 10 forming the array, except for amplitude, if one source 10 becomes inoperative in my array, no change will occur either in the shape of the pressure signature or in the shape of the power spectrum of the array, except for a change in amplitude.

– Since the sharp impulses emitted by my acoustic sources 10 are of minimum phase, processing of the gathered seismic data is greatly simplified.

– Being able to use identical seismic acoustic sources 10 in order to construct a tapered array will greatly simplify their maintenance and will alleviate the inventory problem associated with carrying a wide range of spare parts on the seismic vessel.

– Because breakdown of a single conventional airgun 10′ in a conventional array will detune the array and cause a substantial change in the shape of the pressure signature produced by the array, there is a need when using a conventional array to stop the seismic vessel, pull out the defective array, replace the defective airgun or airguns 10′ in the array, return the array into the water, and then continue with the seismic survey, all of which is very costly to the user of the seismic vessel.

– The loss of one or more of my acoustic sources 10 in my array will not detune the array and the seismic survey can continue without stopping.

## 3. Practical Considerations

– Thus, my acoustic impulse source 10 can make use of conventional seismic generators such as airguns 10′, and can be operated in conjunction with already existing seismic vessels, without requiring any major modifications thereto.

– The cost of constructing and operating my novel energy sources 10 is only a fraction of the corresponding costs involved in Constructing and operating arrays using conventional inefficient seismic energy sources 10′, or such systems as are described in the illustrative patents listed in the background section of this specification. The energy needed to operate by my source 10 is small compared to the energy used by the prior art arrays constructed from known sources 10′.

– The firing chambers which now exist on airguns can be welded or otherwise fixedly secured to each other back-to-back, but care must be taken to ensure that the volumes for the first generator 10′ and for the second generator 10″ comply with the conditions above. Source 10 yields acceptable results : $P_2/P_0$=11% with only .5 lit for the second chamber 14′ and .74 lit for the first chamber 14.

– The needed distance between the centers of ports 16, 16′ can be obtained by interposing spacers between the present firing chambers to extend the distance so as to arrive at about twice the maximum radius of bubble 1.

– In the conventional array of air guns 10′, in order to achieve 50 bar-m (0-125 hz) one needs about 49 lit of air per shot at 138 bar, which means that the total power of the compressor should be around 1000 hp.

– For the same output of 50 bar-m, the present source 10 requires 447 KW instead of 745 KW.

## Claims

1. A method for generating within a body of water an impulsive acoustic signal suitable for use in seismic exploration, said method comprising the steps of generating within said body of water a first explosion to create a first bubble characterized in that the method comprises the further step of generating, within said body of water, a second explosion so as to create a second bubble, said second explosion being generated at about the time when the implosion of the first bubble begins, the energy of the second explosion and the distance L between the second explosion and the first bubble being such that the second bubble interacts with but does not coalesce with the first bubble.

2. A method according to Claim 1, characterized in that said second explosion has the same strength as said first explosion.

3. A method according to Claim 1 or 2, wherein the distance L is about twice the maximum radius of the first bubble, said second explosion being generated while the volume of said first bubble is at its maximum value within a few per cent.

4. A method according to any one of the preceding Claims, wherein the water motion generated by the first bubble initially has a radial motion, the second explosion serving to transform this radial motion into an axial motion.

5. The method according to any one of the preceding Claims, wherein a first charge of a highly compressed gas is explosively released to thereby generate, within said body of water, a powerful acoustic pulse and said first bubble, and a second charge of a highly compressed gas is subsequently released within the water to generate the second bubble.

6. A method according to any one of the preceding Claims when used in seismic exploration, the method steps being repeated while a seismic streamer cable is towed through said body of water for detecting the seismic signals produced.

7. A marine acoustic source (10) for generating impulsive acoustic seismic signals in a body of water, comprising a signal chamber (14) to contain a first charge (Va) of a highly compressed gas (G1), a normally closed first fast-acting valve means (12) to normally maintain said signal chamber (14) closed, the chamber having discharge port means (16) into the water, a second chamber (14') to contain a second charge (Vb) of a highly compressed gas (G2), a normally-closed second fast-acting valve means (12') to normally maintain said second chamber closed, the second chamber having outlet means (16') into the water, and control means (20) explosively open first valve means (12) so as to release said first charge (Va) and thereby generate at a first point within said body of water an impulsive acoustic signal (P₀) and a first bubble (1), and further control means (20') to sub-sequently open said second valve means (12') to thereby release said second charge (Vb) from said second chamber (14') through said outlet means (16') and into said water, characterized in that the further control means (20') are adapted to open said second valve means (12') while said first bubble (1) is substantially at its maximum volume.

8. The marine source (10) according to Claim 7, characterized in that the further control means (20') are such that said second valve means (12') is opened immediately after said body of water starts to implode said first bubble (1).

9. The marine source (10) according to Claim 7 or 8, characterized in that the release of said second charge (Vb) generates a second bubble (2) at a second point within said body of water, said second bubble (2) having substantially the same volume as said first bubble (1), and the distance between said first and said second points being about twice the maximum radius of said first bubble (1)

10. The marine source (10) according to any one of Claims 7 to 9, characterized in that said first valve means (12) is a first airgun, said second valve means (12) is a second airgun, and means (32) are provided maintaining the ports (16) and outlets (16') of said airguns separated by a distance which is substantially equal to about twice the maximum radius of said first bubble (1).

## Ansprüche

1. Verfahren zum Erzeugen eines impulsartigen akustischen Signals in einem Wasservolumen, das geeignet ist für die Verwendung bei der seismischen Exploration, wobei das Verfahren den Schritt des Erzeugens einer ersten Explosion in dem Wasservolumen umfaßt, um eine erste Blase zu schaffen, dadurch gekennzeichnet, daß das Verfahren als weiteren Schritt das Erzeugen einer zweiten Explosion in dem Wasservolumen derart umfaßt, daß eine zweite Blase geschaffen wird, wobei die zweite Explosion ungefähr zu demjenigen Zeitpunkt erzeugt wird, zu dem die Implosion der ersten Blase beginnt, wobei die Energie der zweiten Explosion und der Abstand L zwischen der zweiten Explosion und der ersten Blase derart sind, daß die zweite Blase mit der ersten Blase in Wechselwirkung steht, jedoch sich nicht mit dieser verbindet.

2. Verfahren nach Anspruch 1, dadurch gekennzeichnet, daß die zweite Explosion dieselbe Stärke wie die erste Explosion hat.

3. Verfahren nach Anspruch 1 oder 2, wobei der Abstand L etwa das Doppelte des maximalen Radius der ersten Blase beträgt, wobei die zweite Explosion erzeugt-wird, während das Volumen der ersten Blase auf seinem Maximum ist, mit einer Toleranz von wenigen Prozent.

4. Verfahren nach einem der vorangehenden Ansprüche, wobei die von der ersten Blase hervorgerufene Wasserbewegung anfänglich eine radiale Bewegung umfaßt, wobei die zweite Explosion dazu dient, diese radiale Bewegung in eine axiale Bewegung umzusetzen.

5. Verfahren nach einem der vorangehenden Ansprüche, wobei eine erste Ladung eines hochkomprimierten Gases explosionsartig ausgelöst wird, um dabei in dem Wasservolumen einen starken akustischen Impuls und die erste Blase zu erzeugen, und eine zweite Ladung eines hochkomprimierten Gases im wesentlichen in dem Wasser ausgelöst wird, um die zweite Blase zu erzeugen.

6. Verfahren nach einem der vorangehenden Ansprüche, verwendet bei der seismischen Exploration, wobei die Verfahrensschritte wiederholt werden, während ein seismisches Streamer-Kabel durch das Wasservolumen geschleppt wird, um die erzeugten seismischen Signale zu erfassen.

7. Akustische Wasserquelle (10) zum Erzeugen impulsartiger seismischer Signale in einem Wasservolumen, die umfaßt: Eine Signalkammer (14), welche eine erste Ladung (Va) eines hochkomprimierten Gases (G1) beinhaltet, normalerweise geschlossene erste schnellwirkende Ventil-mittel (12), um normalerweise die Signalkammer (14) geschlossen zu halten, wobei die Kammer Entladeöffnungsmittel (16) zum Wasser hin umfaßt, eine zweite Kammer (14'), die eine zweite Ladung (Vb) hochkomprimierten Gases (G2) umfaßt, normalerweise geschlossene zweite schnellwirkende Ventilmittel (12'), um normalerweise die zweite Kammer geschlossen zu halten, wobei die zweite Kammer Auslaßmittel (16') zum Wasser hin umfaßt, und Überwachungsmittel (20), die explosionsartig die ersten Ventilmittel (12) öffnen, so daß die erste Ladung (Va) ausgelöst wird, und dadurch an einem ersten Punkt innerhalb des Wasservolumens ein impulsartiges akustisches Signal ($P_0$) und eine erste Blase (1) erzeugen, und weitere Überwachungsmittel (20'), um danach die zweiten Ventilmittel (12') zu öffnen, um die zweite Ladung (Vb) der zweiten Kammer (14') durch die Auslaßmittel (16') und in das Wasser zu entladen, dadurch gekennzeichnet, daß die weiteren Überwachungsmittel (20') dazu ausgelegt sind, die zweiten Ventilmittel (12') zu öffnen, während die erste Blase (1) im wesentlichen ihr maximales Volumen hat.

8. Wasserquelle (10) nach Anspruch 7, dadurch gekennzeichnet, daß die weiteren Überwachungsmittel (20') derart sind, daß die zweiten Ventilmittel (12') geöffnet werden, unmittelbar nachdem das Wasservolumen beginnt, die erste Blase (1) zu implodieren.

9. Wasserquelle (10) nach Anspruch 7 oder 8, dadurch gekennzeichnet, daß das Entladen der zweiten Ladung (Vb) eine zweite Blase (2) an einem zweiten Punkt innerhalb des Wassergebietes erzeugt, wobei die zweite Blase (2) im wesentlichen dasselbe Volumen wie die erste Blase (1) hat und der Abstand zwischen dem ersten und dem zweiten Punkt etwa das Doppelte des maximalen Radius der ersten Blase (1) beträgt.

10. Wasserquelle (10) nach einem der Ansprüche 7 bis 9, dadurch gekennzeichnet, daß die ersten Ventilmittel (12) ein erstes luftgewehrartiges Gerät und die zweiten Ventilmittel (12') ein zweites luftgewehrartiges Gerät umfassen und Mittel (32) vorgesehen sind, die Öffnungen (16) und die Auslässe (16') der luftgewehrartigen Geräte in einem Abstand voneinander zu halten, der im wesentlichen das Doppelte. des maximalen Radius der ersten Blase (1) beträgt.

## Revendications

1. Un procédé pour produire à l'intérieur d'une masse d'eau un signal acoustique impulsif pour utilisation en exploration sismique, ledit procédé comprenant les étapes de produire à l'intérieur de ladite masse d'eau une première explosion pour créer une première bulle caractérisé en ce que le procédé comprend l'étape ultérieure de produire, à l'intérieur de ladite masse d'eau, une deuxième explosion de façon à créer une deuxième bulle, ladite deuxième explosion étant produite à peu près au moment où commence l'implosion de la première bulle, l'énergie de la deuxième explosion et la distance L entre la deuxième explosion et la première bulle étant telles que la deuxième bulle interagit mais ne se fond pas avec la première bulle.

2. Un procédé selon la revendication 1, caractérisé en ce que ladite deuxième explosion a la même force que ladite première explosion.

3. Un procédé selon la revendication 1 ou 2, dans lequel la distance L est deux fois environ le rayon maximum de la première bulle, ladite deuxième explosion étant produite pendant que le volume de ladite première bulle est à sa valeur maximum à un petit pourcentage près.

4. Un procédé selon l'une quelconque des revendications précédentes, dans lequel l'impulsion de pression produite par la première bulle a initialement un mouvement radial, la deuxième explosion servant à transformer ce mouvement radial en un mouvement axial.

5. Le procédé selon l'une quelconque des revendications précédentes, dans lequel une première charge d'un gaz fortement comprimé est libérée avec une explosion pour ainsi produire, à l'intérieur de ladite masse d'eau, une puissante impulsion acoustique et ladite première bulle, et une deuxième charge d'un gaz fortement comprimé est libérée dans l'eau par la suite pour produire une deuxième bulle.

6. Un procédé selon l'une quelconque des revendications précédentes lorsqu'il est utilisé en exploration sismique, les étapes du procédé étant répétées pendant qu'une flûte marine est remorquée à travers ladite masse d'eau pour détecter les signaux sismiques produits.

7. Une source acoustique marine (10) pour produire des signaux sismiques acoustiques impulsifs dans une masse d'eau, comprenant une chambre de signal (14) pour contenir une première charge (Va) d'un gaz fortement comprimé (G1), un premier moyen de valve à action rapide normalement fermé (12) pour maintenir normalement fermée ladite chambre de signal (14), la chambre ayant des moyens d'orifice de décharge (16) dans l'eau, une deuxième chambre (14') pour contenir une deuxième charge (Vb) d'un gaz fortement comprimé (G2), un deuxième moyen de valve à action rapide normalement fermé (12') pour maintenir normalement fermée ladite deuxième chambre, la deuxième chambre ayant des moyens d'évacuation (16') dans l'eau, et des moyens de commande (20) ouvrant par explosion le premier moyen de valve (12) de manière à libérer la première charge (Va) et à produire ainsi en un premier point à l'intérieur de ladite masse d'eau un signal acoustique impulsif ($P_0$) et une première bulle (1), et en outre des moyens de commande (20') pour ouvrir ultérieurement ledit deuxième moyen de valve (12') pour libérer ainsi ladite deuxième charge (Vb) de ladite deuxième chambre (14') à travers lesdits moyens d'évacuation (16') et dans ladite eau, caractérisée en ce que les autres moyens de commande (20') sont adaptés pour ouvrir le deuxième moyen de valve (12') pendant que ladite première bulle (1) est sensiblement à son volume maximum.

8. La source marine (10) selon la revendication 7, caractérisée en ce que les autres moyens de commande (20') sont tels que le deuxième moyen de valve (12') est ouvert immédiatement après que ladite masse d'eau commence à causer l'implosion de ladite première bulle (1).

9. La source marine (10) selon la revendication 7 ou 8, caractérisée en ce que la libération, de ladite deuxième charge (Vb) produit une deuxième bulle (2) en un deuxième point à l'intérieur de ladite masse d'eau, ladite deuxième bulle (2) ayant sensiblement le même volume que ladite première bulle (1), et la distance entre ledit premier et ledit deuxième point étant environ deux fois le rayon maximum de ladite première bulle (1).

10. La source marine (10) selon l'une quelconque des revendications 7 à 9, caractérisée en ce que ledit premier moyen de valve (12) est une première soufflette à air comprimé, ledit deuxième moyen de valve (12) est une deuxième soufflette à air comprimé, et des moyens (32) sont fournis maintenant les orifices (16) et les évacuations (16') desdites soufflettes à air comprimé séparés par une distance qui est sensiblement égale à deux fois environ le rayon maximum de ladite première bulle (1).

FIG. I.

FIG. 2.

FIG. 3.

FIG. 4.

14

FIG. 5.

FIG. 6.

FIG.5A.

# FIG. 7.

# FIG. 8.

FIG. 9.

FIG. 10.

EP 0 193 314 B1

FIG. 11.

Va  45 in³

P   2000 psi

D   1.5m ( 4.9 ft.)

FIG. 12.

FIG. 13.

Va  45 in³

Pa  2000 psi

D   1.5m (4.9 ft.)

Vb  30 in³

Pb  2000 psi

D   1.5m (4.9 ft.)

L   0.43m (1.4 ft.)

Td  50 msec

FIG. 14.

FIG. 15.

FIG. 16.

FIG. 17.

FIG. 18.